# EUROPÄISCHE PATENTSCHRIFT

(11) **EP 1 939 446 B1**
(45) Veröffentlichungstag und Bekanntmachung des Hinweises auf die Patenterteilung: **21.09.2011**
(21) Anmeldenummer: 07022853.1
(22) Anmeldetag: 26.11.2007
(51) Int. Cl.: F03D 11/00, F03D 7/02

(54) **Trägerplatte einer Bremsbacke einer Bremsanlage für eine Windenergieanlage (WEA)**
Mounting plate for a brake shoe of a braking system for a wind energy device
Plaque de support d'une mâchoire de frein d'une installation de freinage pour une éolienne

(30) Priorität: 20.12.2006 DE 102006060182
(43) Veröffentlichungstag der Anmeldung: 02.07.2008
(73) Patentinhaber: Kraft, Astrid, 35260 Stadtallendorf (DE); Kraft, Erik, 35260 Stadtallendorf (DE)
(72) Erfinder: Kraft, Astrid, 35260 Stadtallendorf (DE); Kraft, Erik, 35260 Stadtallendorf (DE)
(74) Vertreter: Walther, Walther & Hinz GbR

(56) Entgegenhaltungen:
- EP-A1- 1 571 334
- WO-A1-2005/090780

## Beschreibung

Die Erfindung betrifft eine Trägerplatte einer Bremsbacke einer Bremsanlage für eine Windenergieanlage (WEA), insbesondere eine Azimutbremsanlage, wobei die Trägerplatte einen Bremsbelag aufweist.

Eine Bremsanlage der eingangs genannten Art, insbesondere für Windenergieanlagen ist auch unter der Bezeichnung 'Azimutbremsanlage' bekannt, wie beispielsweise in der EP-A-1 571 334 offenbart. Bei einer solchen Azimutbremsanlage handelt es sich um eine solche, die dafür sorgt, dass die Gondel der WEA auf dem Turm in einer vorbestimmten Stellung verbleibt. Eine solche Azimutbremsanlage ist derart aufgebaut, dass der Sattel der Bremsanlage an der Gondel bzw. am Maschinenhaus angeordnet ist, wohingegen der Turm einen Bremsring aufweist, der zwischen dem Sattel verläuft. Der Sattel nimmt zwei Bremsbacken auf, wobei eine Bremsbacke eine Trägerplatte aufweist, die wiederum mit ihrem Bremsbelag an dem Bremsring anliegt.

Bislang ist es so, dass die Trägerplatten aus Stahl hergestellt sind. Um die Korrosionsbeständigkeit einer solchen Trägerplatte zu gewährleisten, sind die Oberflächen einer solchen Trägerplatte mit einer Schutzschicht versehen, indem sie beispielsweise lackiert oder aber verchromt, verzinkt usw. sind. Nun sollen WEA's in bestimmten zeitlichen Abständen gewartet werden. Im Rahmen einer solchen Wartung wird natürlich auch die Bremsanlage, beispielsweise eine Azimutbremsanlage, insbesondere auch in Hinblick auf die Reststärke der Bremsbeläge überprüft. Es hat sich jedoch in letzter Zeit gehäuft gezeigt, dass die vorgeschriebenen Wartungsintervalle nicht eingehalten werden. Die Folge hiervon ist, dass gegebenenfalls mit verschlissenem Bremsbelag die Azimutbremse weiterhin betrieben wird, mit der Folge, dass die Trägerplatte in Kontakt mit dem Bremsring gelangt. Die Folge hiervon ist zumindest eine Riefenbildung auf dem Bremsring. Ein mit Riefen versehener Bremsring muss bei ausgeprägten Riefen ausgetauscht werden, was mit nicht unerheblichen Kosten verbunden ist.

Der Erfindung liegt die Aufgabe zugrunde, hier Abhilfe zu schaffen. Erfindungsgemäß zeichnet sich eine Trägerplatte der zuvor beschriebenen Art, bei der die oben beschriebenen Probleme nicht auftreten, dadurch aus, dass die Trägerplatte aus einem Material ausgebildet ist, das von geringerer Härte ist, als die Materialoberfläche des Bremsrings oder der Bremsscheibe. Das heißt selbst dann, wenn aufgrund von verschlissenem Bremsbelag die Trägerplatte in Kontakt mit dem Bremsring gelangt, wird der Bremsring keine dauerhaften Schäden davontragen.

Im Einzelnen ist in diesem Zusammenhang vorgesehen, dass die Trägerplatte aus einem Kunststofflaminat, insbesondere einem glasfaserverstärkten Kunstharz oder aber aus einem Nichteisenmetall, z. B. Messing, ausgebildet ist. Der Bremsring besteht üblicherweise aus einem Stahl, wobei insbesondere eine Kunststoffträgerplatte eine solch geringe Härte aufweist, dass selbst bei verschlissenem Bremsbelag der Bremsring oder die Bremsscheibe keinen Schaden nimmt. Die Befestigung des Bremsbelages auf der Trägerplatte erfolgt beispielsweise durch Verschrauben oder Vernieten oder auch stoffschlüssig durch Verkleben oder einfach dadurch, dass das Material für den Bremsbelag mit der Trägerplatte vergossen wird, wobei in einem solchen Fall insbesondere vorgesehen ist, dass die Trägerplatte eine Vertiefung zur Aufnahme des Bremsbelages aufweist.

Anhand der Zeichnungen wird die Erfindung nachstehend beispielhaft näher erläutert.
- Fig.: 1 zeigt schematisch eine Azimutbremse einer Gondel zum Abbremsen der Gondel relativ zum Turm;
- Fig. 2: zeigt eine Trägerplatte mit in einer Vertiefung aufsitzendem Bremsbelag als erste Ausführungsform.
- Fig. 3: zeigt ebenfalls schematisch die Trägerplatte mit auf der Trägerplatte aufsitzendem Bremsbelag in einer zweiten Ausführungsform;

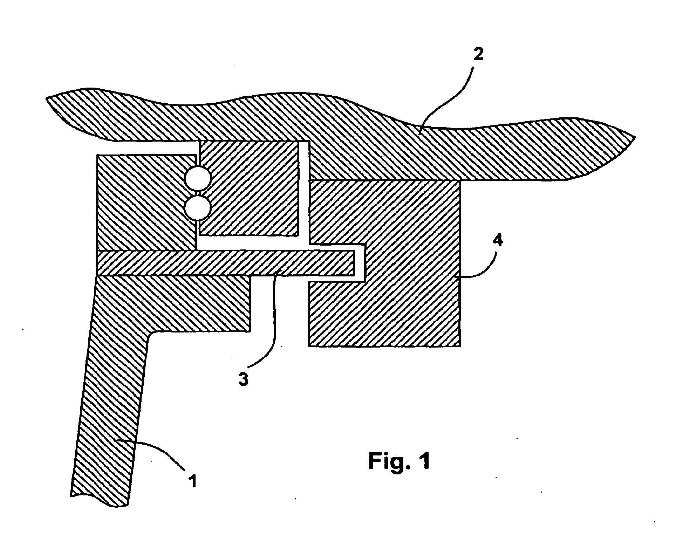

Gemäß Fig. 1 ist der Turm mit 1 bezeichnet, die Gondel mit 2, wobei der Turm den Bremsring 3 aufweist, der zwischen der Bremsanlage 4 durchläuft. Die Bremsanlage 4 als Azimutbremse ist ähnlich aufgebaut, wie die Scheibenbremse bei einem Auto. Insofern sind auch hier Bremsbacken vorgesehen, wobei die Bremsbacken jeweils eine Trägerplatte mit darauf angeordnetem Bremsbelag aufweisen.

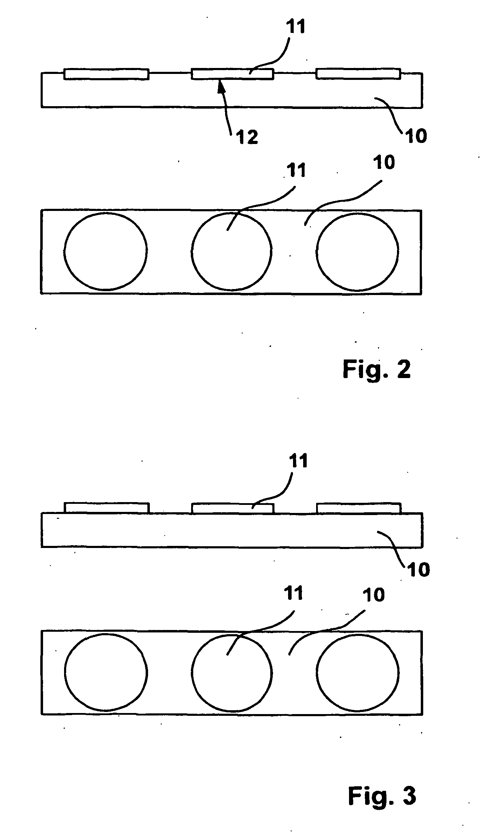

Gemäß den Fig. 2 und 3 sind zwei Ausführungsformen einer solchen Trägerplatte 10 ausgebildet, wobei bei der Ausführungsform gemäß Fig. 2 der Bremsbelag 11 in einer Vertiefung 12 der Trägerplatte lagert, wohingegen bei der Ausführungsform gemäß Fig. 3 der Bremsbelag 11 auf der Trägerplatte, z. B. durch Schrauben oder Nieten, befestigt ist, allerdings auch mit der Trägerplatte 10 verklebt sein kann.

## Patentansprüche

1. Trägerplatte einer Bremsbacke einer Bremsanlage für eine Windenergieanlage (WEA), insbesondere Azimutbremsanlage (4),
mit einem Bremsring (3) oder einer Bremsscheibe,
wobei die Trägerplatte (10) einen Bremsbelag (11) aufweist,
**dadurch gekennzeichnet,**
das die Trägerplatte (10) aus einem Material ausgebildet ist, das von geringerer Härte als die Materialoberfläche des Bremsringes oder der
Bremsscheibe ist.

2. Bremsanlage nach Anspruch 1,
**dadurch gekenntzeichnet,**
dass die Trägerplatte (10) aus einem Kunststofflaminat ausgebildet ist.

3. Bremsanlage nach einem der voranstehenden Ansprüche,
**dadurch gekennzeichnet,**
**dass** die Trägerplatte (10) aus einem glasfaserverstärktem Kunstharz ausgebindet ist.

4. Bremsanlage nach einem der voranstehenden Ansprüche,
**dadurch gekennzeichnet,**
**dass** die Trägerplatte (10) aus einem Nichteisenmetall, z. B. Messing, ausgebildet ist.

5. Bremsanlage nach einem der voranstehenden Ansprüche,
**dadurch gekennzeichet,**
das der Bremsbelag (11) durch Vertiefungen auf der Trägerplatte (10) gehalten ist.

6. Bremsanlage nach einem der voranstehenden Ansprüche,
**dadurch gekennzeichnet,**
**dass** der Bremsbelag (11) auf der Trägerplatte (10) verschraubt oder vernietet ist.

7. Bremsanlage nach einem der voranstehenden Ansprüche,
**dadurch gekennzeichnet,**
**dass** der Bremsbelag (11) mit der Trägerplatte (10) stoffschlüssig durch Kleben oder Vergießen verbunden ist.

## Claims

1. A mounting plate of a brake shoe of a brake system for a wind energy device (WED), in particular an azimuth brake system (4), with a brake ring (3) or with a brake disc, said mounting plate (10) comprising a brake pad (11),
**characterized in**
**that** said mounting plate (10) is made from a material that is of lower hardness than the material surface of the brake ring or of the brake disc.

2. A brake system as set forth in claim 1,
**characterized in**
**that** said mounting plate (10) is made from a plastic laminate.

3. The brake system as set forth in any one of the previous claims,
**characterized in**
**that** said mounting plate (10) is made from a glass fiber reinforced synthetic resin.

4. The brake system as set forth in any one of the previous claims,
**characterized in**
**that** said mounting plate (10) is made from a non-ferrous metal such as brass.

5. The brake system as set forth in any one of the previous claims,
**characterized in**
**that** the brake pad (11) is retained on said mounting plate (10) by recesses.

6. The brake system as set forth in any one of the previous claims,
**characterized in**
**that** the brake pad (11) is screwed or riveted on said mounting plate (10).

7. The brake system as set forth in any one of the previous claims,
**characterized in**
**that** the brake pad (11) is material-to-material bonded to said mounting plate (10) by bonding or casting.

## Revendications

1. Plaque de support d'une mâchoire de frein d'un système de frein pour une centrale éolienne, notamment système de frein azimut (4), avec un anneau de frein (3) ou avec un disque de frein, la plaque de support (10) comportant une garniture de frein (11),
**caractérisée en ce**
**que** la plaque de support (10) est réalisée en un matériau de dureté inférieure à celle de la surface du matériau de l'anneau de frein ou du disque de frein.

2. Système de frein selon la revendication 1,
**caractérisé en ce**
**que** la plaque de support (10) est réalisée en un stratifié plastique.

3. Système de frein selon l'une quelconque des revendications précédentes,
**caractérisé en ce**
**que** la plaque de support (10) est réalisée en une résine synthétique chargée de fibres de verre.

4. Système de frein selon l'une quelconque des revendications précédentes,
**caractérisé en ce**
**que** la plaque de support (10) est réalisée en un métal non-ferreux, p. ex. en laiton.

5. Système de frein selon l'une quelconque des revendications précédentes,
**caractérisé en ce**
**que** la garniture de frein (11) est retenue sur la plaque de support (10) par des renfoncements.

6. Système de frein selon l'une quelconque des revendications précédentes,
**caractérisé en ce**
**que** la garniture de frein (11) est vissée ou rivetée sur la plaque de support (10).

7. Système de frein selon l'une quelconque des revendications précédentes,
**caractérisé en ce**
**que** la garniture de frein (11) est venue de matière avec la plaque de support (10) par collage ou par moulage.
